# EUROPEAN PATENT SPECIFICATION

(11) **EP 0 640 671 B1**
(45) Date of publication and mention of the grant of the patent: **22.10.1997**
(21) Application number: 94904660.1
(22) Date of filing: 19.01.1994
(51) Int. Cl.: C09G 1/14

(54) **METHOD FOR CLEANING AND PREVERVING PIECES OF FURNITURE AND GUILDED AND SIZED WOOD OBJECTS**
VERFAHREN ZUR REINIGUNG UND PFLEGE VON HÖLZERNEN MÖBELN UND GEGENSTÄNDEN : VERGOLDENEN UND VERZIERTEN
PROCEDE POUR LE NETTOYAGE ET LA CONSERVATION DE MEUBLES ET OBJETS EN BOIS, DORES ET APPRETES

(30) Priority: 20.01.1993 ES 9300099
(43) Date of publication of application: 01.03.1995
(73) Proprietor: HITA BOHAJAR, Maria, E-28013 Madrid (ES)
(72) Inventor: HITA BOHAJAR, Maria, E-28013 Madrid (ES)
(86) International application number: ES9400005
(87) International publication number: WO9417150

(56) References cited:
- BE-A- 903 120
- DE-A- 2 243 256
- GB-A- 246 380
- US-A- 3 955 999

## Description

The invention refers to a treatment designed to cleaning and preserving pieces of furniture and guided and sized wood objects, treating to carry out a thorough cleaning without removing varnish, velatura and gold varnish (corladuras).

The special application of the invention meant to obtain a good cleaning without destroying and deteriorating all these own qualities, taking care in your entirety, with own attributes in performance and finish.

The application of this method very easy to use, implies great advantage in the cleaning and preserving of old furniture's, gilded and sized wood objects. This use is applied to the restoration world. The product is harmless to the objects and the persons, because isn't given of toxic vapours, isn't dangerous for the skin. It's very quick and easy to use and leaves a natural protective shine, which makes unnecessary your varnishing or waxed.

US-A-3 955 999 discloses a cream wax composed of bees wax, paraffin wax, tarpentine, linseed oil, naphtha, soap and water.

The method applicable to this invention is the result of many years of research, after testing on over fifty painted wood pieces and ethnographic, polychromatic sculptures and gilded and sized wood objects.

The composition and methodology used represent innovative state of the art techniques, not only for the utilized components, but also for the product which is innovator in this field. Many and assorted are the used mixtures and products, but anyone has those attributes.

In summary, the method consists in the use of two different compositions, which are comprised of different components and are applied in a specific order and through a conveniently designed methodology.

Given the nature of the material to be threaded and considering the great variety, the components of this process may be varied depending on the pieces to be treated. Thus, the proportion of these components should be used within an ample range of proportion given refers, in any case, to criteria for a standard use.

**Method for cleaning and preserving pieces of furniture and gilded and sized wood objects.**

Comprises the following phases:
a) Extend on de surface, a cleaning cream made from saponified fat (100 to 200 gr.); excipient (100 to 200 ml.); linseed oil (25 to 50 ml.); olive oil (25 to 50 ml.); wool fat (25 to 50 gr.); native wax (10 to 25 gr.): clove essence (1 to 2 ml.); pine essence (10 to 20 ml.); sodic tetraborate (3 to 6 gr.). This cream is prepared to T=100º C. (cons) and 760 mm. Hg., beginning with the excipient and saponified fat and the later addition of all components one at time, removing constantly with a wooden and glass stick, adding finally sodic tetraborate, even to obtain a homogeneous cream, which is necessary to leave in cold before to be applicated, having a pH between 8 and 9.
b) The cream to be removed later which cotton of an agglutinin solution. The solution consists essentially of excipient alkaline (200 to 300 ml.); bidistilled glycerin (25 to 75 ml.); polyethyleneglycol 400 (25 to 75 ml.); sodic tetraborate (1 to 3 gr.); essence of pine (5 to 10 ml.). This solution is prepared at room temperature, removing all the ingredients to obtain an homogeneous mixture.

It must be borne in mind that conditions which do not imply a marked deviation from the essence of the invention as defined in the following claims, could be varied while included in the scope of protection obtained by said claims.

## Claims

1. **METHOD FOR CLEANING AND PRESERVING PIECES OF FURNITURE AND GILDED AND SIZED WOOD OBJETS**, caracterized on a first stage by extending, on the object to be treated, a cream consisting essentially of 100 to 200 g of saponified fat, 100 to 200 ml of excipient, 25 to 50 ml of linseed oil, 25 to 50 ml of olive oil, 25 to 50 g of wool fat, 10 to 25 g of native wax, 3 to 6 g sodium tetraborate, 1 to 2 ml of cloves oil, and 5 to 10 ml of pine oil, wherein said cream is preparable in a water bath under constant stirring in order to obtain an homogeneous mixture having a pH between 8 and 9, and wherein said cream is applied to the wood object for a time according to its condition, and it is later removed with cotton.

2. **METHOD FOR CLEANING AND PRESERVING PIECES OF FURNITURE AND GILDED AND SIZED WOOD OBJECTS**, according to the first claim, wherein in a second stage said object is subjected to the action of cleaning with an agglutinating solution by treating said object with cotton impregnated with an emulsion consisting essentially of 200 to 300 ml of alkaline excipient, 25 to 75 ml of bidistilled glycerin, 25 to 75 ml of polyethyleneglycol 400, 1 to 3 g of sodium tetraborate, and 5 to 10 g. of pine oil, wherein said emulsion is preparable by constant stirring at room temperature of said components in order to obtain a homogeneous mixture.

## Patentansprüche

1. VERFAHREN ZUR REININGUNG UND PFLEGE VON HÖLZERNEN MÖBELN UND GEGENSTÄNDEN: VERGOLDENEN UND VERZIERTEN, eine gekennzeichnete Behandlung da in ihrer ersten Phase eine Creme auf das zu behandelnde Objekt aufgetragen wird, die aus 100 g bis 200 g beseiftem Fett, 100 ml bis 200 ml Bindemittel, 25 g bis 50 g Leinsamenöl, 25 ml bis 50 ml Olivenöl, 25 g bis 50 g Lanolin, 10 g bis 25 g rohem Bienenwachs, 3 g bis 6 g Natriumtetraborat, 1 ml bis 2 ml Essenz der Gewürznelke und 5 ml bis 10 ml Pinienessenz besteht. Die besagte Creme gewinnt man bei konstant gehaltener Temperatur von 100°C und bei einem Druck von 760 Torr unter kontinuierlichem Umrühren, bis die Creme vollständig homogen ist. Ihr pH-Wert sollte zwischen 8 und 9 liegen. Die Creme wird zonenweise aufgetragen. Nach einigen Sekunden des Einwirkens wird sie mit Watte entfernt.

2. VERFAHREN ZUR REININGUND UND PFLEGE VON HÖLZERNEN MÖBELN UND GEGENSTÄNDEN VERGOLDENEN UND VERZIERTEN in Übereinstimmung mit der 1. Forderung, gekennzeichnet durch dei folgende Phase, bestehend aus der Reinigung der Creme mit einem Emulsionsbindemittel und Watte. Die besagte Emulsion ist zusammengesetzt aus 200 ml bis 300 ml alkaloiden Bindemittel, 25 ml bis 75 ml boidestiliertem Glyzerin, 25 ml bis 75 ml Poliethylenglykol 400, 1 g bis 3 g Natriumtetraborat und 5 ml bis 10 ml Pinienessenz. Das Bindemittel gewinnt man bei Raumtemperatur unter kontinuierlichem Umrühren, bis sich die Komponenten gut vermischt haben.

## Revendications

1. PROCEDE POUR LE NETTOYAGE ET LA CONSERVATION DE MEUBLES ET OBJETS EN BOIS, DORES ET APPRETES, qui se caractérise par une première phase où l'on étale, sur l'objet à traiter, une crème composée pour 100 a 200 gr. de graisse saponifiée; de 100 à 200 ml. d'excipient; de 25 à 50 gr. d'huile de linde; de 25 à 50 gr. d'huile d'olive; de 25 à 50 gr. de lanoline: de 10 à 25 gr. de cire vierge; de 3 à 6 gr. de tétraborate de soude; de de 1 a 2 gr. d'essence de girofle; de 5 a 10 gr. d'essence de pin. Cette crème est obtenue à T = 100 °C. (constante) y 760 mm. Hg., sous agitation continue jusqu'à devenir homogène. Son pH doit être compris entre 8 et 9. Cette crème est appliquée par zones, où elle est laissée quelques secondes, puis retirée à l'aide d'un coton.

2. PROCEDE POUR LE NETTOYAGE EL LA CONSERVATION DE MEUBLES ET OBJETS EN BOIS, DORES ET APRETES, conformément à la revendication 1, caractérisée par la phase suivante qui consiste à nettoyer la crème à l'aide d'une émulsion agglutinante et d'un coton. Cette émulsion est composée pour 200 à 300 ml. d'un excipient alcalinisé; de 25 à 75 ml. de glycérine biodistillée; de 25 à 75 ml. de polyéthylène-glycol 400; de 1 a 3 gr. de tétraborate de soude; de 5 à 10 gr. d'essence de pin. L'émulsion est obtenue à froid par agitation des composants jusqu'à obtenir le mélange désiré.
